# EUROPÄISCHE PATENTSCHRIFT

(11) **EP 0 384 109 B1**
(45) Veröffentlichungstag und Bekanntmachung des Hinweises auf die Patenterteilung: **19.04.1995**
(21) Anmeldenummer: 90100478.8
(22) Anmeldetag: 11.01.1990
(51) Int. Cl.: F16M 11/04

(54) **Auslegeraufhängung für Steuergeräte**
Suspension arm for control apparatuses
Bras de suspension pour appareils de commande

(30) Priorität: 22.02.1989 DE 8902061 U
(43) Veröffentlichungstag der Anmeldung: 29.08.1990
(73) Patentinhaber: Rose-Elektrotechnik GmbH + Co KG Elektrotechnische Fabrik, D-32457 Porta Westfalica (DE)
(72) Erfinder: Pohlmann, Franz F., D-32423 Minden (DE)
(74) Vertreter: Hanewinkel, Lorenz, Dipl.-Phys.

(56) Entgegenhaltungen:
- DE-C- 3 805 422
- DE-C- 3 805 424
- DE-C- 3 805 425
- DE-U- 8 902 061
- GB-A- 2 083 878
- US-A- 1 425 011

## Beschreibung

Die Erfindung bezieht sich auf eine Auslegeraufhängung für Steuergeräte oder Steuertafeln, mit einem an einer vertikalen oder horizontalen Wandung festlegbaren Wand- oder Aufsatz-Drehgelenk, einem oder mehreren Tragarmabschnitten, einem Zwischen-Drehgelenk, einem Winkel und einer mit dem Steuergerät oder der Steuertafel verbindbaren Kupplung, wobei jeder Tragarmabschnitt von einem mit seinen Längenenden in Einsteckaufnahmen des Wand- oder Aufsatz-Drehgelenkes, des Zwischen-Drehgelenkes, des Winkels und der Kupplung eingesteckten und darin festgesetzten Tragrohr mit eckigem Querschnitt und einem dem Tragrohr zugeordneten, an einer Tragarmabschnittseite durch einen lösbaren Deckel zu öffnenden Kabelkanal gebildet ist.

Bei einer derartigen, aus der DE-C-38 05 425 bekannt gewordenen Auslegeraufhängung ist der Kabelkanal in das Tragrohr integriert, in dem das Tragrohr und der Kabelkanal von einem im Querschnitt aufwendig gestalteten U-Profil mit Trennquersteg zur Aufteilung in den Tragrohrbereich und den Kabelkanalbereich gebildet ist.

Hierbei bilden die über den Trennquersteg hinaus verlängerten U-Schenkel des Tragrohres mit einem lösbaren Deckel einen Kabelkanal.

Weiterhin sind die Einsteckaufnahmen bei dieser bekannten Auslegeraufhängung von an und in die Stirnseite des Tragrohres eingreifenden Wandungsteilen, Stegen und Profilstücken gebildet, die in aufwendiger Weise an die Gelenke, den Winkel und die Kupplung angeformt sind und entsprechend der Profilierung des Tragrohres ausgebildet sein müssen.

Diese Wandungsteile, Stege und Profilstücke umfassen nicht vollständig das Tragrohr auf seinem Umfang, sondern greifen nur auf Umfangsteilbereichen um das Tragrohr und auf Teilbereichen in das Tragrohr ein, wodurch keine stabile Verbindung zwischen Tragrohr und Gelenken, Winkel und Kupplung entsteht, sondern lediglich eine Montageführung.

Für die sichere Verbindung müssen mehrere Schrauben eingesetzt werden, die die Gelenke, den Winkel und Kupplung durchgreifen und in Tragrohr-Längsrichtung in zusätzlich in das Tragrohr eingeformte Schraubenaufnahmen einfassen.

Diese bekannte Auslegeraufhängung ist in den Gelenken, dem Winkel und der Kupplung sowie im Tragrohr mit integriertem Kabelkanal technisch aufwendig und kostspielig gestaltet und hat zur Erzielung einer gewissen Tragfähigkeit die aufwendige Verbindungsausführung und Profilgestaltung unter Inkaufnahme eines höheren Gewichtes.

Aufgabe der Erfindung ist es, ausgehend vom Stand der Technik eine Auslegeraufhängung zu schaffen, welche aus im Querschnitt konstruktionsmäßig einfachen, gewichtmäßig leichten und eine hohe Tragkraft besitzenden Tragrohren, einer einfachen und stabilen Verbindung zwischen Tragrohren und Gelenken, Winkel und Kupplung sowie einem einfach aufgebauten, leicht herstellbaren und bequem zugänglichen, von einem separaten, mit dem Tragrohr zu dem Tragarmabschnitt zusammengesetzten Bauteil gebildeten Kabelkanal aufgebaut sein soll.

Diese Aufgabe wird erfindungsgemäß durch die kennzeichnenden Merkmale des Patentanspruches 1 gelöst; die sich daran anschließenden Unteransprüche 2 bis 13 beinhalten Gestaltungsmerkmale, welche vorteilhafte und förderliche Weiterbildungen der Aufgabenlösung darstellen.

Die Auslegeraufhängung für Steuergeräte oder Steuertafeln ergibt folgende Vorteile:
- das Tragrohr und der Kabelkanal sind voneinander getrennte Teile, in dem das Tragrohr das eigentliche Tragprofil bildet und der Kabelkanal durch ein zusätzliches um das Tragrohr angeordnetes Verkleidungsprofil geschaffen wird,
- das Tragrohr hat einen einfachen Quadratquerschnitt und die Einsteckaufnahmen sind von dem Tragrohr auf dem gesamten Querschnittumfang mit angepaßtem Querschnitt umfassenden topfförmigen Buchsen der Gelenke, des Winkels und der Kupplung gebildet,
- das Tragrohr und die Einsteckaufnahmen sind kostengünstig durch die einfache Konstruktion herstellbar,
- das Tragrohr faßt ohne zusätzliche Führungs- oder Tragmittel in die Einsteckaufnahmen ein und geht mit diesen eine hohe Verbindungsfähigkeit ein, wobei zur Lagefixierung lediglich kleine Schrauben eingesetzt werden, die ohne Erfordernis von Schraubaufnahmen quer zur Tragrohr-Längsrichtung klemmend auf das Tragrohr einwirken,
- das Verkleidungsprofil ist von einem einfachen U-Profil gebildet, umfaßt das Tragrohr mit Spalt dreiseitig und seine über das Tragrohr hinausragenden U-Schenkel bilden im Anschluß an die vierte Tragrohrseite den Kabelkanal, dessen von der U-Öffnung gebildete Zugangsseite durch einen Rastdeckel geschlossen ist,
- das Verkleidungsprofil ist kostengünstig herstellbar und leicht zu montieren und an den Gelenken, dem Winkel und der Kupplung durch Steckverbindung und kleinen Sicherungsschrauben festzulegen,
- durch die Spaltbildung zwischen Tragrohr und Verkleidungsprofil wird eine geräusch- bzw. vibrationsbildende Berührung beider Teile vermieden,
- der Quadratquerschnitt des Tragrohres gibt demselben ein geringes Gewicht bei hoher Tragfähigkeit.

Auf den Zeichnungen ist ein Ausführungsbeispiel gemäß der Erfindung in Variation dargestellt, welches nachfolgend näher erläutert wird. Es zeigt:
- Fig. 1: einen Längsschnitt durch eine Auslegeraufhängung für Steuergeräte, die aus einem Wandgelenk, einem Tragarmabschnitt, einem Zwischengelenk, einem weiteren Tragarmabschnitt, einem Winkel, einem dritten Tragarmabschnitt und einer Kupplung für die Verbindung mit dem Steuergerät gebildet ist,
- Fig. 2: einen Längsschnitt durch einen Teilbereich eines mit einem Gelenkteil verbundenen und von einem Verkleidungsprofil umgebenden Tragrohres eines Tragarmabschnittes,
- Fig. 3: einen Längsschnitt durch eine abgewandelte, aus einem Aufsatzgelenk, einem Tragarmabschnitt, einem Winkel und einer Kupplung gebildeten Auslegeraufhängung,
- Fig. 4: einen Querschnitt durch das Tragrohr und das Verkleidungsprofil mit abgenommenem, einen Kabelkanal freilegenden Deckel,
- Fig. 5: einen Querschnitt durch ein Tragrohr und ein Verkleidungsprofil in weiterer Ausgestaltung,
- Fig. 6: einen Längsschnitt durch eine weitere, abgewandelte Auslegeraufhängung, welche eine Steuertafel stehend trägt,
- Fig. 7: einen Längsschnitt durch eine Kupplung mit geteiltem Drehlager und geteiltem Systemflansch,
- Fig. 8: eine Unteransicht der Kupplung mit geteiltem Systemflansch.

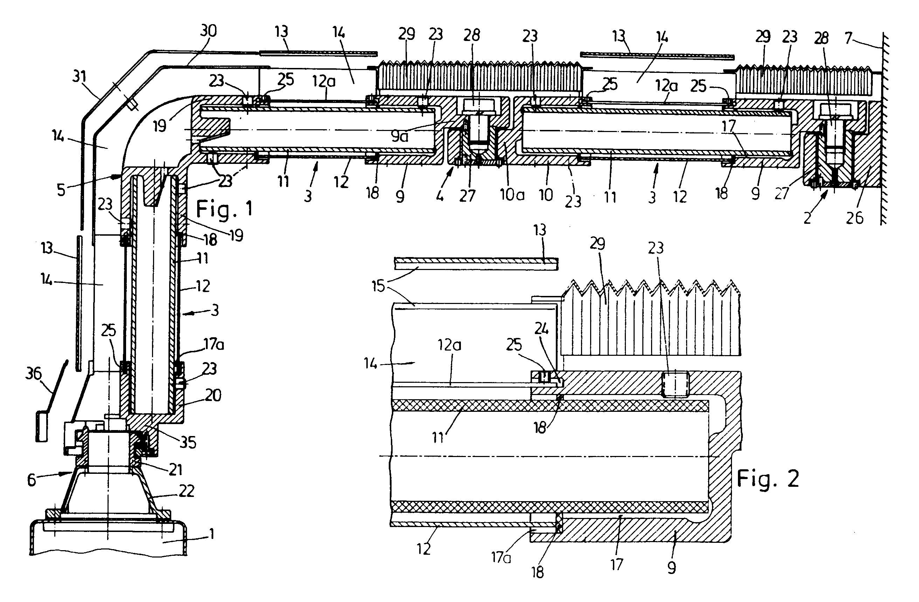

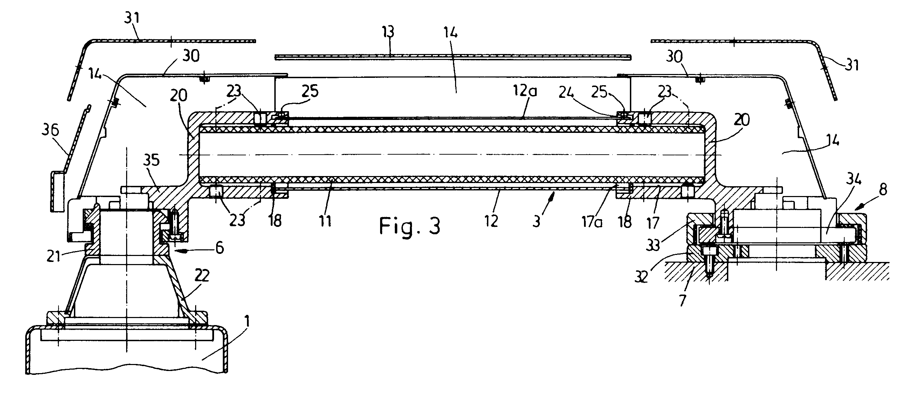

Die Auslegeraufhängung für elektrische und/oder elektronische Steuergeräte (1), insbesondere Steuertafeln, setzt sich gemäß der Ausführung nach Fig. 1 aus einem an einer vertikalen Wandung (7) festlegbaren Wand-Drehgelenk (2), einem ersten, waagerecht verlaufenden Tragarmabschnitt (3), einem Zwischen-Drehgelenk (4), einem zweiten, waagerechten Tragarmabschnitt (3), einem Winkel (5), einem dritten, vertikal verlaufenden Tragarmabschnitt (3) und einer Kupplung (6) zusammen, und gemäß der abgewandelten Ausführung der Auslegeraufhängung nach Fig. 3 ist diese aus einem auf einer horizontalen Wandung (7) festlegbaren Aufsatz-Drehgelenk (8), einem waagerecht verlaufenden Tragarmabschnitt (3), einem Winkel (5) und einer Kupplung (6) gebildet; die Kupplung (6) dient in beiden Ausführungen für die drehbare Aufhängung des Steuergerätes (1) an der Auslegeraufhängung.

Jeder Tragarmabschnitt (3) ist von einem mit seinen beiden Längenenden in dem Drehgelenk (8) und den Winkel (5) (vgl. Fig. 3) bzw. in Drehgelenkteilen (9, 10) des Wand-und Zwischen-Drehgelenkes (2, 4), dem Winkel (5) und der Kupplung (6) eingesteckten und darin festgesetzten Tragrohr (11) mit eckigem Querschnitt und einem das Tragrohr (11) umgebenden, einen an einer Tragarmabschnittsseite durch einen Deckel (13) zu öffnenden Kabelkanal (14) bildenden Verkleidungsprofile (12) gebildet.

Das Tragrohr (11) hat in bevorzugter Weise einen quadratischen Querschnitt. Dieses quadratische Tragrohr (11) besteht aus einem Stahlrohr, es kann aber auch aus Aluminium gefertigt sein.

Bei einer Abmessung des Tragrohres (11) aus Stahl von 80 mm x 80 mm und einer Wandstärke von 5 mm hat das Rohr (11) auf 3 m Länge eine Tragkraft von ca. 50 kg und bei den Abmessungen von 80 mm x 80 mm und einer Wandstärke von 8 mm eine Tragkraft auf 3 m Länge von ca. 75 kg.

Das Verkleidungsprofil (12) zeigt einen U-förmigen Querschnitt und die geöffnete U-Seite wird durch den Deckel (13) unter Rastverbindung geschlossen; hierfür sind an den U-Schenkeln des Verkleidungsprofiles (12) und am Deckel (13) zusammenwirkende Rastleisten (15) in Nut-Federausführung angeformt, so daß der Deckel (13) zum Zugang zum Kabelkanal (14) vom Verkleidungsprofil (12) abgenommen werden kann. Die geöffnete U-Seite des Verkleidungsprofiles (12) liegt bei dem oder den horizontal verlaufenden Tragarmabschnitten (3) oben und bei dem vertikal verlaufenden Tragarmabschnitt (3) an der dem Drehgelenk (2) abgewandten Außenseite des Tragarmabschnittes (3).

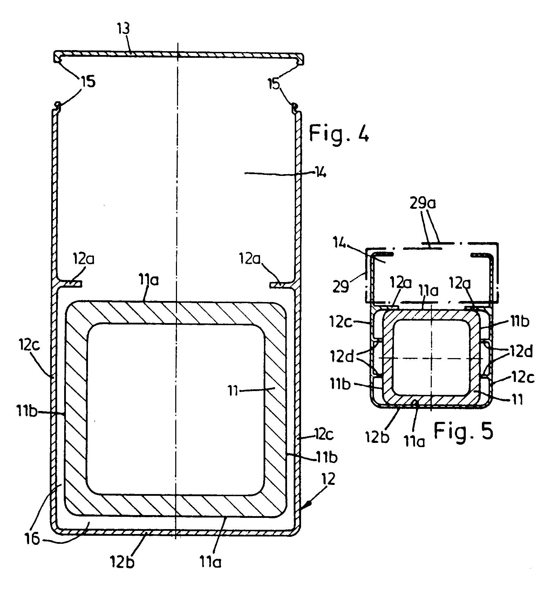

Wie Fig. 4 den Tragarmabschnitt im Querschnitt zeigt, umgreift das Verkleidungsprofil (12) das Tragrohr (11) mit Abstand, so daß ein umlaufender Umfangsspalt (16) zwischen beiden Tragarmteilen (11, 12) gebildet ist, durch den eine geräusch- bzw. vibrationsbildende Berührung beider Tragarmteile (11, 12) vermieden wird.

Jedes Drehgelenk (2, 4, 8), der Winkel (5) und die Kupplung (6) ist mit einer Einsteckaufnahme (17) ausgestattet, in die das Tragrohr (11) mit einer gewissen Länge seines jeweiligen Rohrendes eingreift, und zwar mit umfangsmäßigem Spiel; in diesem Umfangsspalt zwischen Tragrohr (11) und Einsteckaufnahme (17) ist mindestens eine Dichtung (18) in Form einer Rahmendichtung angeordnet, so daß zwischen Tragrohrende und Einsteckaufnahme (17) keine metallische Berührung vorliegt, die zu Geräuschen und Vibrationen führen könnte.

Jede Einsteckaufnahme (17) ist vom Innenraum einer topfartigen, im Querschnitt dem Tragrohr (11) angepaßten und vorzugsweise ebenfalls quadratischen Buchse gebildet, die bei den Drehgelenken (2, 4, 8) das Gelenkteil (9 und 10) bildet. Der Winkel (5) hat zwei rechtwinklig zueinander stehende und miteinander einstückig verbundene (geformte), topfförmige Einsteckbuchsen (19) und die Kupplung (6) besitzt ebenfalls eine topfförmige Einsteckbuchse (20), die gemäß Fig. 1 senkrecht steht und gemäß Fig. 3 waagerecht verläuft und in deren angeformten Lageransatz (35) ein Drehlager (21) mit Flanschteil (22) der Kupplung (6) befestigt ist, an welches das Steuergerät (1) drehbar aufgehängt ist, d.h., um die senkrechte Achse des Drehlagers (21) drehbar ist.

Jedes Tragrohr (11) ist mit seinen beiden Längenenden in den Einsteckaufnahmen (17) der Gelenkteile (9, 10) der Einsteckbuchsen (19, 20) durch mehrere Schrauben (23) festgesetzt.

Das U-förmige, durch den lösbaren Deckel (13) geschlossene Verkleidungsprofil (12) ergibt einen rechteckigen Querschnitt und umfaßt das Tragrohr (11) mit seinem der geöffneten U-Seite gegenüberliegenden, von dem Profilboden (12b) und einem Teil der Profilschenkel (12c) gebildeten Querschnittsbereich, so daß der andere Querschnittsbereich den Kabelkanal (14) bildet, welcher bei den waagerecht verlaufenden Tragarmabschnitten (3) oberhalb des Tragrohres (11) und beim senkrechten Tragarmabschnitt gemäß Fig. 1 an der dem Wandgelenk (2) abgewandten Außenseite des Tragrohres (11) liegt.

Das Verkleidungsprofil (12) zeigt innenseitig angeformte, sich gegenüberliegende und aufeinanderzu gerichtete Stege (12a), die mit Abstand zu einer Quadratseite (11a) des Tragrohres (11) liegen und praktisch den Tragrohrbereich vom Kabelkanal (14) abteilen.

Jedes Verkleidungsprofil (12) greift mit seinem das Tragrohr (11) umgebenden Querschnittsbereich in eine Erweiterung (17a) der Einsteckaufnahme (17) ein, die für das Verkleidungsprofil (12) an der freien Einsteckbuchsen-Stirnseite liegt, und faßt mit den kurzen Stegen (12a) in separate Schlitze (24) der Einsteckbuchsen (9, 10, 19, 20) ein, wobei die Einstecktiefe der Verkleidungsprofile (12) einen geringen Teil der Einstecktiefe der Tragrohre (11) in den Einsteckbuchsen (9, 10, 19, 20) beträgt.

Die Verkleidungsprofile (11) werden ebenfalls durch eine oder mehrere Schrauben (25) in den Einsteckbuchsen (9, 10, 19, 20) festgesetzt, indem diese Schrauben (25) auf die Stege (12a) einwirken.

Die Schrauben (23, 25) sind von klemmend wirkenden Gewindestiften mit Ringschneide gebildet.

Die Verkleidungsprofile (12) liegen innerhalb der Einsteckaufnahme (17) mit ihrer Stirnseite an der Rahmendichtung (18) an.

Das Wandgelenk (2) besitzt einen an der vertikalen Wandung (7) festlegbaren Wandflansch (26), in dem das Gelenkteil (9) mittels eines senkrechten Drehzapfens (27) nach beiden Seiten schwenkbar gelagert ist; das Gelenkteil (9) steht über einen Ansatz (9a) und einer Schraube (28) mit dem durch ein Gleitlager im Wandflansch (26) drehbar gelagerten Drehzapfen (27) in Verbindung.

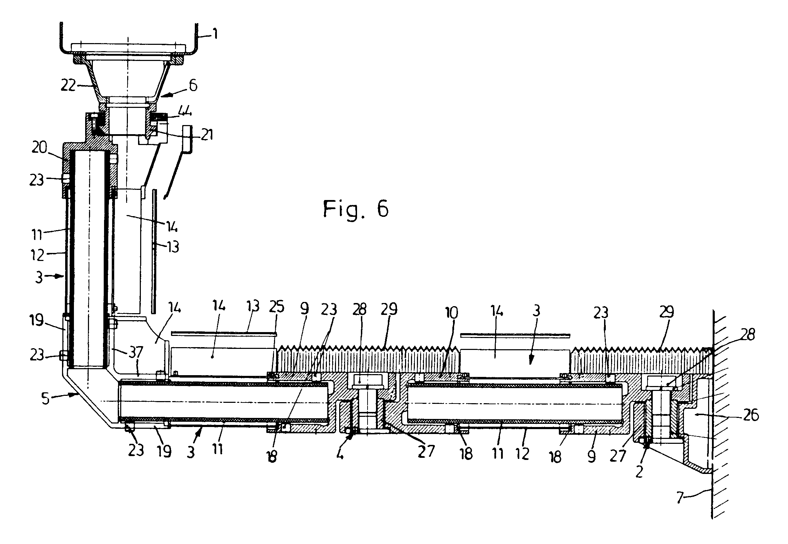

Das Zwischengelenk (4) setzt sich aus den beiden Gelenkteilen (9, 10) zusammen, die mit ihren Ansätzen (9a, 10a) übereinanderliegen und durch eine Schraube (28) mit dem im Gelenkteil-Ansatz (10a) unter Zwischenschaltung eines Gleitlagers drehbar gelagerten, senkrechten Drehzapfen (27) verbunden sind. Zwischen den Gelenkteil-Ansätzen (9a, 10a) ist eine Gleitscheibe angeordnet und die beiden Gelenkteile (9, 10) können gegeneinander nach beiden Seiten um ihre senkrechte Gelenkachse (27, 28) verschwenken. Auf dem Wandgelenk (2) und dem Zwischengelenk (4) gemäß Fig. 1 ist jeweils ein Faltenbalg (29) angeordnet (aufgesetzt und durch Klammern od. dgl. an den Gelenken (2, 4) gehalten), der im Bereich des Kabelkanales (14) in Längsrichtung geteilt ist, so daß der Faltenbalg (29) zum Einbringen von elektrischen Kabel geöffnet (auseinandergeklappt) werden kann; in der geschlossenen Stellung liegen die Ränder (29a) des Faltenbalges (29) sich überlappend übereinander (Fig. 5).

An dem Winkel (5) ist ebenfalls ein einen Kabelkanal (14) bildendes Verkleidungsprofil (30) angeformt, dessen geöffnete Kabelkanalseite von einer Winkelabdeckung (31) verschlossen ist, die durch Schrauben, Rastverbindung od. dgl. lösbar am Verkleidungsprofil (30) festgelegt ist.

Die elektrischen Kabel können vom Wandgelenk (2) aus über das Gelenk (2) hinweg durch den Faltenbalg (29) in dem sich daran anschließenden Kabelkanal (14), dann durch den Faltenbalg (29) über das Zwischengelenk (4) hinweg durch den sich daran anschließenden waagerechten und winklig um den Winkel (5) herum und den sich daran anschließenden senkrechten Kabelkanal (14) und durch die Kupplung (6) (durch dessen Drehlager (21) und das Flanschteil (22) hindurch) in das Steuergerät (1) verlaufen, wodurch ein vollkommen verdeckter und durch die zu öffnenden Kabelkanäle (14) sowie Faltenbälge (29) leicht zugänglicher Kabelverlauf gegeben ist.

Das Aufsatzgelenk (8) nach Fig. 3 hat einen auf der waagerechten Wandung (7) festlegbaren Aufsatzflansch (Flanschplatte) (32), auf dem unter Zwischenschaltung von Gleitscheiben das Gelenkteil (20) mit einer durch einen Lagerdeckel (33) auf dem Flansch (32) gehaltenen Lagerscheibe (34) um die senkrechte Achse drehbar gelagert ist. Die Kupplung (6) ist bei dieser Ausführung mit ihrem Drehlager (21) drehbar in einem Lageransatz (35) des zweiten Gelenkteiles (20) um die senkrechte Achse drehbar gelagert. Das Gelenkteil (20) mit seinem Lageransatz (35) stellt einen Winkel (5) zwischen horizontalem Tragarmabschnitt (3) und vertikaler Kupplung (6) dar. Zwischen beiden Gelenkteilen (20) ist ein waagerechter Tragarmabschnitt (3) angeordnet.

Das Aufsatzgelenk (8) und das die Kupplung (6) tragende Gelenkteil (20) mit Lageransatz (35) lassen sich ebenfalls von einem als Eckwinkel ausgebildeten Verkleidungsprofil (30) mit lösbarer Winkelabdeckung (31) zur Bildung des Kabelkanales (14) überdecken. Es ist dabei bevorzugt, das Verkleidungsprofil (30) an dem Gelenkteil (20) anzuformen. Anstelle der Verkleidungsprofile (30) kann das Aufsatzgelenk (8) und das Gelenkteil (20) mit Lageransatz (35) auch von einem durch einen Längsschnitt zu öffnenden Faltenbalg (29) umgeben sein.

Bei dieser Ausführung werden die elektrischen Kabel durch das hohle Aufsatzgelenk (8) (dessen Flansch (32), Lagerscheiben (34) und Lagerdeckel (33)), dann den winkelförmig verlaufenden Kabelkanal (14) über das Gelenkteil (20) hinweg, durch den waagerechten Kabelkanal (14) und dann durch den winkelförmigen Kabelkanal (14) und die Kupplung (6) hindurch bis zum Steuergerät (1) verlegt.

Der Lageransatz (35) des Gelenkteiles (20) ist bei beiden Ausführungen an der Kabelkanalseite geöffnet und diese Öffnung wird durch eine lösbare Abdeckkappe (36) verschlossen.

Die beiden Tragarmvarianten gemäß Fig. 1 und 3 sind auf den Zeichnungen mit abgenommenen Deckeln (13), Winkelabdeckungen (31) und Abdeckkappe (36) dargestellt.

Gemäß der abgewandelten Ausführungsform nach Fig. 5 ist das den Kabelkanal (14) bildende Verkleidungsprofil (12) kraft- und formschlüssig um das im Querschnitt quadratische Tragrohr (11) angeordnet, in dem das Verkleidungsprofil (12) mit dem Profilboden (12b) an einer Rohrseite (11a) und mit den beiden Stegen (12a) an der gegenüberliegenden Rohrseite (11a) anliegt und mit mehreren innenseitig an beiden Profilschenkeln (12c) angeformten Stegen (12d) an den beiden sich gegenüberliegenden Rohrseiten (11b) sich abstützt.

Hierbei ist zwischen dem Rohr (11) und dem Verkleidungsprofil (12) keine Dichtung (18) angeordnet, sondern es besteht ein flächen- und streifenförmiger Berührungskontakt zwischen Rohr (11) und Profil (12), wodurch eine große Steifigkeit und Tragfähigkeit der Tragarmabschnitte (3) erreicht wird.

Das Rohr (11) kann geringere Wandstärke haben und wird durch das anliegende Verkleidungsprofil (12) in der Steifigkeit verstärkt, so daß bei geringem Gewicht des Tragarmabschnittes (3) eine hohe Tragfähigkeit erzielt wird.

Die Verkleidungsprofile (12, 30) mit Abdeckungen (13, 31, 36) lassen sich aus Stahl, Aluminium od. dgl. herstellen.

Die Gelenke (2, 4), Winkel (5) und Kupplung (6) bestehen ebenfalls aus Metall, wie Stahlguß.

Die Fig. 6 zeigt eine Auslegeraufhängung, welche ein von unten kommendes Tragsystem für ein Steuergerät (Steuertafel) (1) bildet, in dem diese Auslegeraufhängung mit dem Wandflansch (26) ihres Wand-Drehgelenkes (2) an einer vertikalen Wandfläche (7) oder einer Maschine befestigt ist und ihr vertikaler Tragarmabschnitt (3) nicht wie in Fig. 1 nach unten, sondern nach oben gerichtet ist und das Steuergerät (1) stehend auf seiner oben liegenden Kupplung (6) trägt.

Die Bauteile und Verbindungen dieser Auslegeraufhängung entsprechen der Ausführung nach Fig. 1 und deshalb sind für diegleichen Bauteile auch die gleichen Bezugszahlen eingesetzt.

Lediglich der Winkel (5) ist abgeändert ausgebildet, indem an seine beiden Einsteckbuchsen (19) ein obenliegendes Aufnahmestück (37) zur Bildung des vom waagerechten in den senkrechten Tragarmabschnitt (3) übergehenden Kabelkanal (14) angeformt ist.

Bei dieser Ausführung verläuft der durchgehende Kabelkanal (14) bei den waagerechten Tragarmabschnitten (3) ebenfalls oben und an der Innenecke (37) des Winkels (5) sind an der Innenseite des senkrechten Tragarmabschnittes (3) bis in die Kupplung (6).

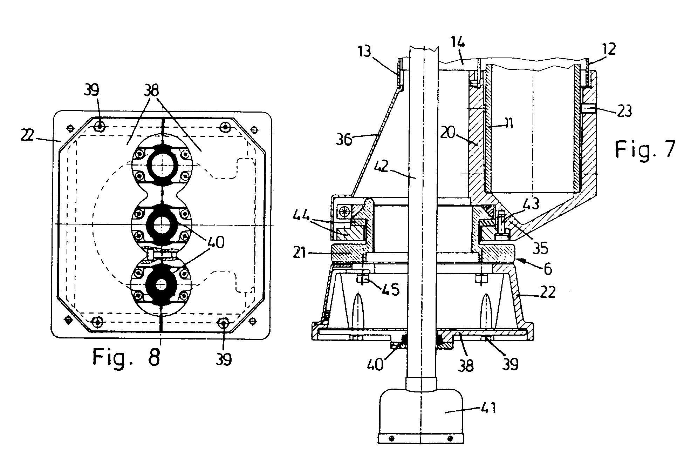

Fig. 7 zeigt die Kupplung (6), die sowohl zur hängenden (Fig. 1 und 3) als auch zur stehend tragenden Befestigung des Steuergerätes (1) eingesetzt werden kann.

Das mittels Schrauben (43) und unter Zwischenschaltung von Gleit- und Tragringen (44) im Lageransatz (45) drehbar gehaltene Drehlager (21) ist hierbei geteilt und im daran mittels Schrauben (45) befestigten Flanschteil (22) ist ein geteilter Systemflansch (38) durch Schrauben (39) lösbar gehalten. Der Systemflansch (38) hat mehrere Durchführringe (40) (sogenannte Zwiebelringe) unterschiedlicher Durchmesser zum Durchführen verschiedener Kabel (42) und Kabeldurchmesser.

Hierbei kann eine Vorkonfektionierung des verhältnismäßig großen Verbindungssteckers (41) zum Steuergerät (1) in der Aufhängung erfolgen, da dieser durch das geteilte Drehlager (21) paßt und durch Herausnahme des geteilten Systemflansches (38) (ein Flanschteil) der Stecker (41) direkt ins Steuergerät (1) eingeführt werden kann.

Auch besteht wahlweise die Möglichkeit, das Steuergerät (1) direkt unter bzw. auf dem Drehlager (21) zu befestigen, so daß auf das Flanschteil (22) verzichtet werden kann.

## Patentansprüche

1. Auflegeraufhängung für Steuergeräte (1) oder Steuertafeln (1), mit einem an einer vertikalen oder horizontalen Wandung (7) festlegbaren Wand- oder Aufsatz-Drehgelenk (2, 8), einem oder mehreren Tragarmabschnitten (3), einem ZwischenDrehgelenk (4), einem Winkel (5) und einer mit dem Steuergerät (1) oder der Steuertafel (1) verbindbaren Kupplung (6), wobei jeder Tragarmabschnitt (3) von einem mit seinen Längenenden in Einsteckaufnahmen (17, 19, 20) des Wand- oder Aufsatz-Drehgelenkes (2, 8), des Zwischen-Drehgelenkes (4), des Winkels (5) und der Kupplung (6) eingesteckten und darin festgesetzten Tragrohr (11) mit eckigem Querschnitt und einem dem Tragrohr (11) zugeordneten, an einer Tragarmabschnittseite durch einen lösbaren Deckel (13) zu öffnenden Kabelkanal (14) gebildet ist, dadurch gekennzeichnet, daß das Tragrohr (11) jedes Tragarmabschnittes (3) einen quadratischen Querschnitt hat, mit seinem jeweiligen Rohrende in eine im Querschnitt dem Tragrohrquerschnitt angepaßte, umfangmäßig geschlossene Einsteckaufnahme (17, 19, 20) der Gelenke (2, 4, 8), des Winkels (5) und der Kupplung (6) eingesteckt und durch auf das Tragrohr (11) klemmend einwirkende Schrauben (23) lösbar mit der Einsteckaufnahme (17) lagefixiert ist,
und um das Tragrohr (11) ein im Querschnitt U-förmiges, das Tragrohr (11) dreiseitig übergreifendes und im Anschluß an die vierte Tragrohrseite außerhalb des Tragrohres (11) den Kabelkanal (14) bildendes Verkleidungsprofil (12) angeordnet ist, dessen die Zugangsseite zum Kabelkanal (14) bildende U-Öffnung durch einen Rastdeckel (13) verschlossen ist.

2. Auslegeraufhängung nach Anspruch 1, dadurch gekennzeichnet, daß das Verkleidungsprofil (12) das Tragrohr (11) mit einem umlaufenden Umfangsspalt (16) anlagelos umgreift.

3. Auslegeraufhängung nach Anspruch 1 oder 2, dadurch gekennzeichnet, daß jede Einsteckaufnahme (17) von als topfartige Buchsen ausgebildeten Drehgelenkteilen (9, 10, 20) der Drehgelenke (2, 4, 8) und der Kupplung (6) und von zwei einteilig verbundenen und rechtwinklig zueinander stehenden topfförmigen Buchsen (19) des Winkels (5) gebildet ist, in die das Tragrohr (11) jeweils mit einer gewissen Länge seine Rohrendes unter Zwischenschaltung mindestens einer Dichtung (18) in Form einer Rahmendichtung eingreift.

4. Auslegeraufhängung nach einem der Ansprüche 1 bis 3, dadurch gekennzeichnet, daß jedes Verkleidungsprofil (12) mit einem das Tragrohr (11) umgehenden Querschnittsbereich in die Einsteckaufnahme (17), vorzugsweise eine Erweiterung (17a) der Einsteckaufnahme (17), und einen Schlitz (24) der Drehgelenkteile (9, 10, 20) und der Winkelbuchsen (19) eingesteckt und durch Schrauben (25) lösbar lagefixiert ist.

5. Auslegeraufhängung nach einem der Ansprüche 1 bist 4, dadurch gekennzeichnet, daß das U-förmige Verkleidungsprofil (12) einen rechteckigen Querschnitt besitzt und das Tragrohr (11) mit seinem Profilboden (12b) und jeweils einem Teil der Profilschenkel (12c) mit Abstand umgreift und zwei an den Innenseiten der Profilschenkel (12c) angeformte, sich gegenüberliegende und aufeinander zu gerichtete und mit Abstand zur vierten Tragrohrseite liegende Stege (12a) hat, auf welche die Schrauben (25) zur Verkleidungsprofilfixierung in den Drehgelenkteilen (9, 10, 20) und den Winkelbuchsen (19) einwirken und welche den Tragrohrbereich vom Kabelkanal (14) abteilen.

6. Auslegeraufhängung nach einem der Ansprüche 1 bis 5, dadurch gekennzeichnet, daß das Verkleidungsprofil (12) mit mindestens einem Umfangsteilbereich seiner Stirnseite an der Rahmendichtung (18) der Tragrohrlagerung anliegt.

7. Auslegeraufhängung nach einem der Ansprüche 1 bis 6, dadurch gekennzeichnet, daß der Deckel (13) durch an den Profilschenkeln (12c) des Verkleidungsprofiles (12) und an seinen Längsrändern angeformte Rastleisten (15) in Nut-Federausführung unter Rastverbindung lösbar am Verkleidungsprofil (12) gehalten ist.

8. Auslegeraufhängung nach einem der Ansprüche 1 bis 7, dadurch gekennzeichnet, daß auf dem Wand- bzw. Aufsatzgelenk (2, 8) und dem Zwischengelenk (4) jeweils ein im Bereich der offenen Kabelkanalseite geteilter, zum Einbringen elektrischer Kabel in der Teilung zu öffnender und in der geschlossenen Stellung sich mit seinen Teilungsrändern (29a) überlappender Faltenbalg (29) angeordnet, vorzugsweise lösbar festgelegt ist.

9. Auslegeraufhängung nach einem der Ansprüche 1 bis 8, dadurch gekennzeichnet, daß am Aufsatzgelenk (8) und am Winkel (5) jeweils ein einen Kabelkanal (14) bildendes Verkleidungsprofil (30) mit lösbarer Winkelabdeckung (31) angeordnet, vorzugsweise angeformt ist.

10. Auslegeraufhängung nach einem der Ansprüche 1 bis 9, dadurch gekennzeichnet, daß das den Kabelkanal (14) bildende Verkleidungsprofil (12) das Tragrohr (11) kraft- und formschlüssig umfaßt und dabei das Verkleidungsprofil (12) mit dem Profilboden (12b) an einer Tragrohrseite (11a) und mit seinen innenseitig angeformten Stegen (12a) an der gegenüberliegenden Tragrohrseite (11a) anliegt und mit mehreren innenseitig zwischen dem Profilboden (12b) und den Stegen (12a) an den Profilschenkeln (12c) angeformten Stegen (12d) an den beiden anderen sich gegenüberliegenden Tragrohrseiten (11b) abstützt.

11. Auslegeraufhängung nach einem der Ansprüche 1 bis 10, dadurch gekennzeichnet, daß das Tragrohr (11) und das Verkleidungsprofil (12) mit Deckel (13) aus Metall, wie Stahl, aus Aluminium o. dgl. bestehen.

12. Auslegeraufhängung nach einem der Ansprüche 1 bis 11, dadurch gekennzeichnet, daß dieselbe als mit einem Wand-Drehgelenk (2) an einer vertikalen Wandung (7) oder Maschine festlegbare und das Steuergerät (1) oder die Steuertafel auf einem vertikal nach oben gerichteten Tragarmabschnitt (3) tragende Vorrichtung ausgebildet ist und zwischen vertikalem und waagerechten Tragarmabschnitt (3) einen Winkel (5) mit an der Innenecke angeformten Aufnahmestücken (37) zur Bildung des Kabelkanal-Überganges vom obenliegenden waagerechten in den senkrechten Kabelkanal (14) aufweist.

13. Auslegeraufhängung nach einem der Ansprüche 1 bis 12, dadurch gekennzeichnet, daß die Kupplung (6) ein geteiltes Drehlager (21) hat, an dem ein Flanschteil (22) lösbar befestigt ist, in dem ein geteilter Systemflansch (38) mit Kabeldurchführungen (40) herausnehmbar gehalten ist.

## Claims

1. Mounted support for control units (1) or control boards (1), comprising a wall-type or platform-type pivot joint (2, 8) adapted to be located on a vertical or horizontal wall (7), one or more carrier arm sections (3), an intermediate pivot joint (4), an angle (5) and a coupling (6) adapted to be connected to the control unit (1) or control board (1), each carrier arm section (3) being constituted by a carrier tube (11) of angular cross-section whose longitudinal ends are pushed into and fixed in push-in locators (17, 19, 20) of the wall-type or platform-type pivot joint (2, 8), of the intermediate pivot joint (4), of the angle (5) and of the coupling (6), and a cable duct (14) associated with the carrier tube (11) and opened up on one side of the carrier arm section by means of a removable cover (13),
characterised in that the carrier tube (11) of each carrier arm section (3) has a square cross-section, is pushed by its respective tube end into a push-in locator (17, 19, 20) - with a cross-section matching the cross-section of the carrier tube and closed around its circumference - of the joints (2, 4, 8), of the angle (5) and of the coupling (6), and is positionally fixed to the push-in locator (17) by screws (23) which squeeze the carrier tube (11) so as to clamp it,
and around the carrier tube (11) is arranged a masking profile (12) of U-shaped cross-section which extends over three sides of the carrier tube (11) and which following on from the fourth side of the carrier tube forms the cable duct (14) outside the carrier tube (11), the U-shaped opening of said masking profile (12), forming the access face to the cable duct (14), being sealed by a latching cover (13).

2. Mounted support according to claim 1, characterised in that the masking profile (12) engages around the carrier tube (11) without touching it, with an all-round circumferential gap (16).

3. Mounted support according to claim 1 or 2, characterised in that each push-in locator (17) is formed by pivot joint parts (9, 10, 20), in the form of pot-type bushes, of the pivot joints (2, 4, 8) and of the coupling (6) and by two integrally connected pot-shaped bushes (19) belonging to the angle (5), which are at right angles to one another and into which the carrier tube (11) engages in each case by a certain length of its tube end, with at least one interposed seal (18) in the form of a frame seal.

4. Mounted support according to any of claims 1 to 3, characterised in that each masking profile (12) is removably fixed in position by screws (25), with one cross-sectional zone which bypasses the carrier tube (11) pushed into the push-in locator (17), preferably an extension (17a) of the push-in locator (17), and into a slot (24) on the pivot joint parts (9, 10, 20) and on the angle bushes (19).

5. Mounted support according to any of claims 1 to 4, characterised in that the U-shaped masking profile (12) has a rectangular cross-section and engages with clearance around the carrier tube (11) by its profile floor (12b) and a respective part of the profile side-pieces (12c), and has two cross-pieces (12a), opposing one another and directed at one another, moulded on the inner faces of the profile side-pieces (12c), with clearance to the fourth carrier tube face, upon which cross-pieces (12a) the screws (25) act so as to locate the masking profile in the pivot joint parts (9, 10, 20) and the angle bushes (19) and which divide the carrier tube region from the cable duct (14).

6. Mounted support according to any of claims 1 to 5, characterised in that the masking profile (12) bears with at least one circumferential sub-region of its front face against the frame seal (18) of the carrier tube mounting.

7. Mounted support according to any of claims 1 to 6, characterised in that the cover (13) is held removably on the masking profile (12) in a latching connection by tongue-and-groove style locking strips (15) moulded on the profile side-pieces (12c) of the masking profile (12) and on the longitudinal edges thereof.

8. Mounted support according to any of claims 1 to 7, characterised in that arranged on the wall-type or platform-type joint (2, 8) and on the intermediate joint (4), and preferably removably located, is in each case a bellows (29) divided in the vicinity of the open cable duct face, which bellows will be opened for introducing electric cables in the division and which overlaps by its dividing edges (29a) in the closed position.

9. Mounted support according to any of claims 1 to 8, characterised in that arranged, and preferably moulded, at the platform-type joint (8) and at the angle (5) is a respective masking profile (30) forming a cable duct (14) and having a removable angle cover (31).

10. Mounted support according to any of claims 1 to 9, characterised in that the masking profile (12) forming the cable duct (14) grips the carrier tube (11) in an adherence-fit and interlocking-fit and at the same time the masking profile (12) bears with the profile floor (12b) against one carrier tube face (11a) and with its internally moulded cross-pieces (12a) against the opposing carrier tube face (11a) and supports it on the other two opposing carrier tube faces (11b) with a plurality of cross-pieces (12d) moulded internally between the profile floor (12b) and the cross-pieces (12a) on the profile side-pieces (12c).

11. Mounted support according to any of claims 1 to 10, characterised in that the carrier tube (11) and the masking profile (12) along with the cover (13) are made from metal, for example steel, aluminium or the like.

12. Mounted support according to any of claims 1 to 11, characterised in that the same is designed as a device adapted to be located by a wall-type pivot joint (2) on a vertical wall (7) or machine and supporting the control unit (1) or control board on a vertically upward-directed carrier arm section (3) and between the vertical and horizontal carrier arm section (3) has an angle (5) with locator pieces (37) moulded on the inner corner to form the cable duct interface from the upper horizontal to the vertical cable duct (14).

13. Mounted support according to any of claims 1 to 12, characterised in that the coupling (6) has a split pivot bearing (21) to which is releasably fastened a flange part (22) in which a split system flange (38) with cable duct guides (40) is held in a manner enabling it to be taken out.

## Revendications

1. Bras de suspension pour appareils de commande (1) ou tableaux de commande (1) avec une articulation pivotante (2, 8) murale ou posée, pouvant être fixée sur une paroi verticale ou horizontale, un ou plusieurs secteurs de bras support (3), une articulation pivotante, intermédiaire (4), une pièce angulaire (5) et un accouplement (6) pouvant être raccordé à l'appareil de commande (1) ou au tableau de commande (1), chaque secteur de bras support (3) étant formé par un tube porteur à section transversale angulaire (11), dont l'extrémité longitudinale est enfichée et fixé dans des pièces d'enfichage (17, 19, 20) de l'articulation pivotante mural ou posée (2, 8), de l'articulation pivotante intermédiaire (4), de la pièce angulaire (5) et de l'accouplement (6), un canal à câble (14), pouvant être ouvert, côté secteur bras support, à l'aide d'un couvercle amovible (13),
caractérisé en ce que
le tube support (11) de chaque secteur de bras support (3) présente une section transversale quadrangulaire et est enfiché par son extrémité dans une pièce d'enfichage (17, 19, 20) des articulations (2, 4, 8) de la pièce triangulaire (5) et de l'accouplement (6) de section transversale adaptée à la section transversale du tube support et fermée sur le pourtour, et que des vis (23), exerçant un serrage sur le tube support (11), maintiennent celui-ci de façon amovile dans la pièce d'enfichage (17),
et qu'un profilé de parement (12) de section transversale en U, embrassant le tube support (11) de trois côtés et forme un canal pour câble, lequel fait suite au quatrième côté du tube support (11), à l'extérieur de celui-ci, est disposé autour du tube support (11), l'ouverture en U, qui forme l'accès du canal pour câble (14), étant fermée par un couvercle s'enclenchant.

2. Bras de suspension selon la revendication 1, caractérisé en ce que
le profilé de parement (12) saisit, le tube support (11) , sans prendre appui, à l'aide d'une rainure circonférentielle (16).

3. Bras de suspension selon la revendication 1 ou 2,
caractérisé en ce que
chaque pièce d'enfichage (17) est formée par des pièces articulées rotatives (9, 10, 20) en forme de douilles des articulations (2, 4, 8) et de l'accouplement (6) et de deux douilles (19) de la pièce angulaire (5) reliées d'une pièce et disposées à angle droit par rapport l'une à l'autre, dans lesquelles le tube support (11) s'engage sur une certaine longueur de son extrémité, un dispositif d'étanchéité (18) au moins étant prévu, lequel forme l'étanchéité du cadre.

4. Bras de suspension selon l'une des revendications 1 à 3,
caractérisé en ce que
chaque profilé de parement (12) est enfiché, par une zone de section transversale entourant le tube support (11), dans la pièce d'enfichage (17), de préférence dans un élargissement (17a) de celle-ci, et une fente (24) des pièces d'articulation (9, 10, 20) et des douilles (19), et est fixé, de façon amovible, à l'aide de vis (25).

5. Bras de suspension selon l'une des revendications 1 à 4,
caractérisé en ce que
le profilé de parement en U (12) possède une section transversale à angle droit et embrasse le tube support (11) avec son fond profilé (12b) et une partie des branches de profilé (12c), à intervalle, et est équipé de deux languettes (12a) formées à partir des côtés internes des branches (12c) du profilé et se faisant face, dirigées l'une vers l'autre et situées à intervalle du quatrième côtés du tube support, des vis (25) exerçant un serrage sur ces languettes (12a) aux fins de fixation du profilé de parement dans les pièces d'articulation (9, 10, 20) et les douilles (19), les languettes (12a) séparant la zone de tube support du canal pour câble (14).

6. Bras de suspension selon l'une des revendications 1 à 5,
caractérisé en ce que
une zone partielle, circonférentielle de la partie frontale du profilé de parement (12) porte contre le dispositif d'étanchéité du cadre (18) du logement du tube support.

7. Bras de suspension selon l'une des revendications 1 à 6,
caractérisé en ce que
le couvercle (13) est maintenu, de façon amovible, par enclenchement, à l'aide de pièces d'exécution Nutfeder (15) formées à partir des branches (12c) du profilé de parement (12) et de ses bords longitudinaux.

8. Bras de suspension selon l'une des revendications 1 à 7,
caractérisé en ce que
un soufflet (29), divisé dans la zone du côté ouvert du canal pour câble et ouvrable pour l'installation de câbles électriques, les bords (29a) se chevauchant en position fermée, est disposé sur l'articulation (2, 8) et l'articulation intermédiaire (4) et fixé préférablement de façon amovible.

9. Bras de suspension selon l'une des revendications 1 à 8,
caractérisé en ce que
un profilé de parement (30), formant un canal de câble (14) avec pièce de couverture angulaire (31) amovible, équipe resp. l'articulation (8) et la pièce angulaire (5) et est préférentiellement formé d'une pièce à partir de celles-ci.

10. Bras de suspension selon l'une des revendications 1 à 9,
caractérisé en ce que
le profilé de parement (12), formant le canal de câble (14), embrasse, par adhésion et en engagement positif, le tube support (11), le fond (12b) du profilé de parement (12) portant contre un côté du tube support (11a) et les languettes formées à partir de l'intérieur (12a) portant contre le côté opposé et plusieurs languettes (12d), formées, à l'intérieur, à partir des branches de profilé (12c), entre le fond du profilé (12b) et les languettes (12a) portent contre les deux autres côtés opposés du tube support (11b).

11. Bras de suspension selon l'une des revendications 1 à 10,
caractérisé en ce que
le tube support (11) et le profilé de parement (12) avec couvercle (13) sont exécutés en métal, comme acier, aluminium ou analogue.

12. Bras de suspension selon l'une des revendications 1 à 11,
caractérisé en ce que
celui-ci est conçu sous forme de dispositif pouvant être monté avec une articulation pivotante (2) à un mur vertical (7) ou sur une machine et portant l'appareil ou le panneau de commande (1) sur un secteur de bras support vertical (3), dirigé vers le haut, et qu'il présente, entre le secteur vertical et le secteur horizontal du bras support (3), une pièce angulaire (5) avec des pièces de réception (37), formées à partir de l'angle intérieur en vue de former une pièce de transition entre la partie horizontale et la partie verticale du canal à câble (14).

13. Bras de suspension selon l'une des revendications 1 à 12,
caractérisé en ce que
l'accouplement (6) est équipé d'un coussinet pivotant (21) divisé, auquel une pièce à bride (22) est fixée de façon amovible, une bride (38) avec passage de câbles (40) y étant maintenue et pouvant être retirée.
